# EUROPÄISCHE PATENTSCHRIFT

(11) **EP 1 239 727 B1**
(45) Veröffentlichungstag und Bekanntmachung des Hinweises auf die Patenterteilung: **25.02.2004**
(21) Anmeldenummer: 00988786.0
(22) Anmeldetag: 12.12.2000
(51) Int. Cl.: A01N 25/16

(54) **VERWENDUNG VON ANIONISCHEN TENSIDEN IN HEISSSCHÄUMEN ZUR ENTFERNUNG VON UNERWÜNSCHTEN PFLANZEN**
USE OF ANIONIC SURFACTANTS IN HOT FOAMS FOR ELIMINATING WEEDS
UTILISATION D'AGENTS TENSIOACTIFS DANS DES MOUSSES CHAUDES, AFIN D'ELIMINER DES PLANTES PARASITES

(30) Priorität: 21.12.1999 DE 19961664
(43) Veröffentlichungstag der Anmeldung: 18.09.2002
(73) Patentinhaber: Cognis Deutschland GmbH & Co. KG, 40589 Düsseldorf (DE)
(72) Erfinder: HEROLD, Claus-Peter, 40822 Mettmann (DE); KEHL, Ralf, 40489 Düsseldorf (DE); BELL, Doris, 40627 Düsseldorf (DE)
(86) Internationale Anmeldenummer: PCT/EP2000/012579
(87) Internationale Veröffentlichungsnummer: WO 2001/045505

(56) Entgegenhaltungen:
- EP-A- 0 070 074
- WO-A-98/56496
- US-A- 3 463 231
- US-A- 3 637 021
- US-A- 3 713 404
- US-A- 4 997 592
- US-A- 5 575 111

## Beschreibung

Die vorliegende Erfindung betrifft ein Verfahren zur Entfernung von unerwünschten Pflanzen mittels Heißschaum sowie die Verwendung von anionischen Tensiden in Heißschäumen zur Entfernung unerwünschter Pflanzen.

Die Entfernung unerwünschten Pflanzenwachstums erfolgt regelmäßig durch Einsatz chemischer Substanzen, die entweder für die Pflanze direkt oder indirekt schädlich sind und zum Absterben der Vegetation führen. Die in diesem Bereich zum Einsatz kommenden Chemikalien sind allerdings nicht nur für die Pflanzen toxisch sondern können auch für Mensch und Tier gefährlich werden. Weiterhin handelt es sich hierbei vielfach um Substanzen, die schlecht oder gar nicht biologisch abbaubar sind oder sich in der Vegetationskette anreichern. Der Einsatz derartiger chemischer Unkrautvernichtungsmittel (Herbizide) ist daher stark limitiert und erfordert seitens des Bedienungspersonals besondere Qualifikationen. Neben den chemischen Methoden zur Unkrautvemichtung existieren auch mechanische Verfahren. Besonders effizient ist hierbei die Verwendung von heißer Luft und/oder heißem Wasser. Bei derartigen Verfahren wird auf die Pflanzen heiße Luft und/oder heißes Wasser aufgesprüht, wobei die Wachsschicht (die sog. Cutikula) auf den Pflanzenoberflächen aufgeschmolzen wird und die Pflanzen aufgrund dieser Verletzung eingehen. Die Vorteile dieser Verfahren im Vergleich zu den chemischen Mitteln liegt auf der Hand. Es besteht nicht die Gefahr der Kontamination der Umgebung; weiterhin ist kein besonders geschultes Bedienungspersonal notwendig.

Neben der Verwendung von heißem Wasserdampf ist auch die Verwendung von Heißschäumen zur Vernichtung unerwünschtem Pflanzenwachstums Stand der Technik. So beschreibt die AU-A 39335/97 ein Verfahren zur Kontrolle von Vegetation, wobei heißes Wasser unter Druck auf die Oberfläche der Pflanzen aufgebracht wird, um so die Pflanzen abzutöten. Dabei können gemäß der Offenbarung dieses Dokuments sowohl heißes Wasser selber als auch heißer Dampf oder Mischungen eingesetzt werden. Die US 5,575,111 beschreibt ebenfalls ein Verfahren zur Zerstörung und Kontrolle von unerwünschter Vegetation, wobei eine Mischung aus heißem Wasser und heißem Dampf unter Druck zu einem Heißschaum vermischt werden, der auf die Pflanzen aufgebracht wird und dort durch Zerstörung der Cutikula die gewünschte Wirkung erzielt Die Schrift offenbart weiterhin, daß der Einsatz von Schäumen im Sinne der Lehre dieses Dokuments besonders vorteilhaft ist da die Kontaktzeit zwischen heißem Schaum und der Pflanzenoberfläche länger ist als bei der Anwendung von heißem Wasserdampf. Dies führt zu einer gründlicheren und effizienteren Entfernung des Unkrauts. Zur Erzeugung des Schaums lehrt die US 5,575,111 den Einsatz von Tensiden, macht aber keine konkreten Aussagen über deren Struktur bzw. die Menge an Tensid.

Obwohl der Einsatz von Schaum, beispielsweise im Sinne der oben zitierten US 5,575,111 zu einer effizienten Vernichtung bzw. Kontrolle von unerwünschten Pflanzenwachstum führt, zeigt auch dieses Verfahren in der Praxis noch Nachteile. So ist es insbesondere notwendig, daß der Schaum eine gewisse Mindestzeit vorzugsweise 20 bis 200 Sek. stabil bleibt wobei auch die Struktur des Schaums nämlich möglichst feinporig von Bedeutung ist Auf der anderen Seite darf der Schaum nicht zu lange stabil bleiben sondern muß innerhalb einer überschaubaren Zeit zerfallen. Das Problem, das die vorliegende Erfindung löst ist also die Bereitstellung eines verbesserten Verfahrens zur Vernichtung von unerwünschtem Pflanzenwachstum durch Heißschaum. Die oben aufgezeigten Nachteile lassen sich erfindungsgemäß durch Auswahl bestimmter Tenside lösen.

Gegenstand der vorliegenden Erfindung ist daher ein Verfahren zur Entfernung von unerwünschten Pflanzen mittels Heißschaum, bei dem heißes Wasser unter Druck mit heißer Luft vermischt wird und so ein Schaum gebildet wird, der auf die Oberfläche der Pflanze aufgebracht wird, wobei das Wasser anionische Tenside, ggf. in Kombination mit weiteren Hilfs- und Zusatzstoffen enthält Die Herstellung von Heißschaum kann nach allen dem Fachmann hierfür bekannten Methoden erfolgen. US-A-3 463 231 und US-A- 3637021 beschreiben die Verwendung von Heißschaum mit Zusatz von anionischen Tensiden zur Reinigung von Bohrinseln. Die bevorzügten anionischen Tenside sind Alphaolefinsulfonate und Alkylbenzylsulfonate. Hier sei nur exemplarisch auf die Lehre der US 5,575,111 oder der bereits zitierten AU-A-39335/97 verwiesen. Entsprechende Apparaturen zur Erzeugung derartiger Heißschäume sind beispielsweise in der WO 99/02033 offenbart In der Regel wird zur Erzeugung eines heißen Schaums heißes Wasser und heiße Luft unter Druck vermischt und durch entsprechende Vorrichtung der sich dann bildende Schaum auf die Pflanzen aufgebracht. Die Temperatur des Heißschaums muß in einem Bereich liegen der ausreicht die Wachsschicht auf der Oberfläche der Pflanzen aufzuschmelzen. Vorzugsweise liegt die Temperatur des Heißschaumes im erfindungsgemäßen Verfahren im Bereich von 70 bis 120 °C, insbesondere im Bereich von 75 bis 110 °C und ganz besonders im Bereich von 80 bis 100 °C. Je nach eingesetztem Schaumerzeugungsverfahren werden 80 bis 85 Vol.-% heiße Luft mit 5 bis 20 Vol.-% heißem Wasser vermischt um entsprechende Heißschäume zu erzeugen. Das Wasser bzw. die Luft wird vor der Schaumerzeugung erhitzt und zwar vorzugsweise auf Temperaturen von 60 bis 100 °C, wobei die Luft auch auf höhere Temperaturen, beispielsweise bis 150 °C erhitzt werden kann. Der Heißdampf wird durch Vermischen des Wassers mit Druckluft erzeugt wobei ein Luftdruck im Bereich von 1000 bis 10000 kPa bevorzugt ist.

Es sei an dieser Stelle angemerkt, daß mit den Heißschäumen nicht nur unerwünschte Pflanzen sondern auch Insekten, Pilze, Bakterien, Viren etc. entfernt werden können.

Erfindungswesentlich ist die Verwendung anionischer Tenside im Wasser zur Erzeugung des Heißdampfs. Es hat sich gezeigt, daß gemäß der erfindungsgemäßen Lehre Heißschäume erhalten werden, die in ihrer Schäumzeit und in der Konsistenz des Schaumes optimale Bedingungen für die Zerstörung der Vegetation erreichen. Als anionische Tenside, die im Rahmen der vorliegenden technischen Lehre einzusetzen sind, haben sich vorzugsweise Alkylsulfate mit 8 bis 22 C-Atomen als vorteilhaft erwiesen. Die Herstellung derartiger Alkylsulfate ist dem Fachmann bekannt, wobei beispielsweise ein Fettalkohol mit Schwefelsäure verestert und anschließend neutralisiert wird. Modernere Verfahren setzen Chlorsulfonsäure im geringen Überschuß als Sulfatierungsagenz ein. In technischen Anlagen ist heute die Sulfatierung mit in Erdgas verdünnten Schwefeltrioxid die Methode der Wahl. Die Alkylsulfate gemäß der vorliegenden Erfindung leiten sich von primären Fettalkoholen mit 8 bis 22, vorzugsweise 12 bis 18 Kohlenstoffatomen ab. Vorzugsweise werden unverzweigte primäre Fettalkohole, beispielsweise Caprylalkohol, Perlagonalkohol, Caprinalkohol, Laurylalkohol, Myristylalkohol, Palmitylalkohol, Stearylalkohol, Arachidylalkohol und Behenylakohol eingesetzt. Auch Diese werden nach dem Fachmann bekannten Methoden zu entsprechenden Alkylsulfaten umgesetzt

Neben den Alkylsulfaten können auch Fettalkylethersulfate im Rahmen der vorliegenden technischen Lehre als anionische Tenside eingesetzt werden. Auch Fettalkylethersulfate, kurz Ethersulfate genannt, sind dem Fachmann bekannte Verbindungen, die durch Umsetzung der entsprechenden Oxethylate mit Aminosulfonsäure, Chlorsulfonsäure, vorzugsweise aber mittels gasförmigem Schwefeltrioxid in Kurzzeitsulfier-Reaktoren hergestellt werden. Vorzugsweise werden Ethersulfate mit 8 bis 18 C-Atomen eingesetzt. Es kämen auch Ethersulfate, ausgehend von C₁₂-C₁₅ Fettalkoholethoxylaten mit 2 bis 3 Mol Mol Fettalkohol als Ausgangssubstanzen eingesetzt werden. Wie auch die oben beschriebenen Fettalkylsulfate werden die Fettalkylethersulfate vorzugsweise in Form ihrer Salze, vorzugsweise Alkalioder Erdalkalisalze und insbesondere die Natriumsalze im erfindungsgemäßen Verfahren eingesetzt. Als weitere besonders bevorzugte Klasse an anionischen Tensiden haben sich Sulfobemsteinsäureester erwiesen. Dabei handelt es sich um dem Fachmann bekannte Verbindungen, wobei z.B. Maleinsäureester mit Natriumbisulfit umgesetzt werden. Es können sowohl Mono- als auch Diester der Sulfobernsteinsäure eingesetzt werden. Neben Sulfobernsteinsäureestern als solchen werden auch deren Derivate und hier vorzugsweise die Sulfobernsteinsäureester der Fettsäurealkanolamide im Rahmen der vorliegenden technischen Lehre eingesetzt. Ebenfalls bevorzugt sind die gut wasserlöslichen Sulfobernsteinsäureamide, die sogenannten Sulfosuccinamate, die man durch Umsetzung von Fettaminen mit 8-22 C-Atomen mit Maleinsäureanhydrid und anschließender Addition von Natriumbisulfit erhält. Die Alkylketten der Sulfobernsteinsäureamide enthalten vorzugsweise jeweils 8 bis 22 Kohlenstoffatome. Die Sulfosuccinate gehorchen der allgemeinen Formel (I) 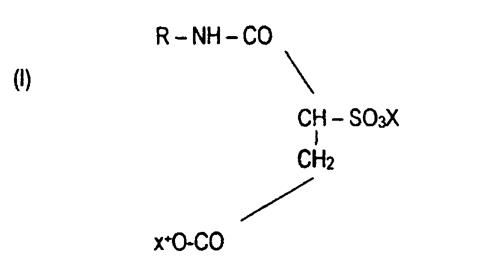 wobei R für einen Alkylrest mit 8 bis 22 C-Atomen steht und X für ein Anion, vorzugsweise ein Natriumion steht.

Als besonders bevorzugte Substanzen haben sich zum einen das Natriumsalz des Laurylsulfats und zum anderen das Di-Natriumsalz von C₁₆-C₁₈ Alkylsulfosuccinamaten erwiesen. Deren Einsatz ist daher im vorliegenden Verfahren besonders bevorzugt Die anionischen Tenside werden erfindungsgemäß im Wasser in Mengen von 0,1 bis 25 Gew.-%, vorzugsweise von 0,1 bis 15 Gew.-% und insbesondere von 0,25 bis 8 Gew.-% verwendet. Die Mengenangabe in der vorliegenden Anmeldung beziehen sich, soweit nicht anders angegeben, immer auf Gew.-% Aktivsubstanz bezogen auf das zur Heißschaumherstellung benötigte Wasser.

Es hat sich weiterhin als vorteilhaft erwiesen, das erfindungsgemäße Verfahren dahingehend auszugestalten, daß neben den anionischen Tensiden noch weitere Zusatzstoffe, vorzugsweise solche aus der Gruppe der organischen Polyhydroxyverbindungen und deren Derivate im Wasser enthalten sind. Als geeignete Polyhydroxyverbindungen bzw. deren Derivate haben sich insbesondere Alkyl(oligo)glycoside erwiesen. Alkyl- und/oder Alkenyloligoglykoside stellen bekannte nichtionische Tenside dar, die der Formel (II) folgen,

R¹O-[G]ₚ (II)

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht. Sie können nach den einschlägigen Verfahren der präparativen organischen Chemie erhalten werden. Stellvertretend für das umfangreiche Schrifttum sei hier auf die Übersichtsarbeit von Biermann et al. in Starch/Stärke 45, 281 (1993), B.Salka in Cosm.Toil. 108, 89 (1993) sowie J.Kahre et al. in SÖFW-Journal Heft 8, 598 (1995) verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Die Indexzahl p in der allgemeinen Formel (II) gibt den Oligomerisierungsgrad (DP), d. h. die Verteilung von Mono- und Oligoglykosiden an und steht für eine Zahl zwischen 1 und 10. Während p in einer gegebenen Verbindung stets ganzzahlig sein muß und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest R¹ kann sich von primären Alkoholen mit 4 bis 18, vorzugsweise 8 bis 12 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden. Bevorzugt sind Alkyloligoglucoside der Kettenlänge C₈-C₁₀ (DP = 1 bis 3), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole (DP = 1 bis 3). Der Alkyl- bzw. Alkenylrest R¹ kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylafkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können. Bevorzugt sind Alkyloligoglucoside auf Basis von gehärtetem C_{12/14}-Kokosalkohol mit einem DP von 1 bis 3.
Weiterhin bevorzugt ist die Mitverwendung von Glycerin im Wasser das für die Heißdampfverzeugung mit Luft vermischt wird. Es sind aber auch andere Polyhydroxyverbindungen im Sinne der beanspruchten technischen Lehre einsetzbar, beispielsweise Mono- und Diester der Sorbitane mit Fettsäuren, z. B. Sorbitanmono-(di) -laurat -oleat, -palmitat -stearat Weiterhin sind geeignet Glucose, Fructose, Zuckersirup, Rohrzucker, Sorbit, Dextrine und Oligoglycerine.

Im Rahmen der erfindungsgemäßen Lehre können die Zusatzstoffe auch miteinander kombiniert zum Einsatz kommen. Prinzipiell werden die Zusatzstoffe im Wasser in Mengen (bezogen auf Aktivsubstanz) von 0,1 bis 25 Gew.-%, vorzugsweise 0,1 bis 20 Gew.-% und insbesondere von 0,1 bis 15 Gew.-% eingesetzt. Die tensidischen wäßrigen Zubereitungen, die für die Heißdampferzeugung im erfindungsgemäßen Verfahren verwendet werden weisen vorzugsweise alkalische pH-Werte und insbesondere im Bereich von 8 bis 12 auf.

Eine weitere vorteilhafte Ausgestaltungsform der erfinderischen Lehre besteht darin, dem Wasser für die Heißdampfbereitung Mischungen verschiedener anionischer Tenside zuzugeben. Besonders bevorzugt ist in diesem Zusammenhang die Kombination der Alkylsulfate mit 8 bis 22 C-Atomen und der Sulfobernsteinsäureester bzw. deren Derivate mit 8 bis 22 C-Atomen. Dabei ist es insbesondere bevorzugt diese beiden Tenside in Mengenverhältnissen (jeweils bezogen auf Aktivsubstanz) von Alkylsulfat von Sulfobernsteinsäureester im Bereich von 1 : 1 bis 100 : 1 und vorzugsweise im Bereich von 50: 1 bis 30 : 1 einzusetzen.

Zur weiteren Stabilisierung der Schäume im erfindungsgemäßen Verfahren hat es sich als vorteilhaft erwiesen, dem Wasser vor der Luftzugabe aber nach der Zugabe der Tenside bestimmte Polymere, ausgewählt aus der Gruppe der Polyacrylate oder der anionisch modifizierten polymeren Heterosaccharide, zuzusetzen. Aus letzter Gruppe hat sich insbesondere das Xanthan gum als besonders vorteilhaft erwiesen. Bei Xanthan gum handelt es sich um ein mikrobielles anionisches Heteropolysaccharid. Es wird von Xanthomonas campestris und einigen anderen Species unter aeroben Bedingungen produziert. Xanthan gum wird aus einer Kette mit β-1,4-gebundener Glucose (Cellulose) mit Seitenketten gebildet Die Struktur der Untergruppen ("repeated units") besteht aus Glucose, Mannose, Glucuronsäure, Acetat und Pyruvat Die Anzahl der Pyruvat-Einheiten bestimmt die Viskosität des Xanthan gum. Weitere geeignete Polymere sind Stärke und polymere Cellulosederivate sowie Guar, Methylcellulose, Carboxymethylcellulose, Hydroxyethylcellulose, Hydroxypropylguar, Alignate, Polyacrylsäuren.

Die Menge an Polymer, die im erfindungsgemäßen Verfahren zugesetzt werden muß, liegt vorzugsweise im Bereich von 0,01 bis 1 Gew.-% (bezogen auf Aktivsubstanz). Die gemäß dem vorliegenden Verfahren hergestellten Heißdämpfe sind feinporig und über einen ausreichenden Zeitraum stabil. Ein weiterer Aspekt der vorliegenden Erfindung betrifft die Formulierung der erfindungsgemäßen wässerigen Lösungen für die Heißdampferzeugung. Es kann sowohl eine mit anionischen Tensiden und gegebenenfalls Zusatzstoffen kombinierte Lösung eingesetzt werden, als auch eine wässrige anionentensidhaltige Lösung allein mit einer zweiten, weitere Zusatzstoffe enthaltenen Lösung oder Dispersion zusammen eingesetzt werden. Die Vermischung der beiden flüssigen Formulierungen erfolgt erst unmittelbar beim Einsatz, also der Heißdamperzeugung. Dies kann vorteilhaft sein, wenn die Kombination von Tensiden und Zusatzstoffen z. B. nicht ausreichende Lagerstabilität aufweist. So hat es sich als vorteilhaft erwiesen, Polyacrylate oder Xanthangum unabhängig von der tensidischen Komponente zu formulieren.

Es kommt beim Einsatz zur Unkrautvernichtung zu einer effizienten Wärmeübertragung zwischen Schaum und Pflanze, die zu einer schnellen und vollständigen Zerstörung unerwünschten Pflanzenwachstums führt.

Das erfindungsgemäße Verfahren kann ganz allgemein eingesetzt werden um Straßen und Flächen, beispielsweise im kommunalen Bereich, insbesondere für eine Unkrautentfernung am Straßenrand besonders geeignet. Es eignet sich aber auch um Gleisanlagen oder Flughäfen und ähnliche Anlagen von Unkraut zu befreien. Auch im Obstbau ist der Einsatz eines derartigen Verfahrens möglich.

Ein weiterer Gegenstand der vorliegenden Erfindung betrifft daher die Verwendung von anionischen Tensiden in Heißschäumen zur Entfernung von unerwünschten Pflanzen.

### Beispiele

Zur Demonstration der Wirksamkeit des erfindungsgemäßen Verfahrens wurden Schaumversuche wie folgt durchgeführt.
200 ml Brauchwasser wurden auf 90°C vorgeheizt, dann wurde das Tensid zugesetzt und die Mischung in einem mm-skalierten Standzylinder gefüllt. Durch kräftiges Rühren wurde die Mischung aufgeschäumt und anschließend die Halbwertszeit gemessen bis sich 100 ml Wasser abgesetzt hatten. Sowohl die Messung der Schaumhöhe als auch der Halbwertszeit wurde jeweils zweimal wiederholt. Gefordert waren Schaumhöhen von mind. 800 mm und Halbwertszeiten von über 230 Sekunden. Außerdem wurde die Schaumdichte visuell bearbeitet.
In der Tabelle 1 sind entsprechend verschiedene Tenside, auch in Mischungen und ggf. mit Hilfsstoffen, aufgeführt und weiterhin die Schaumhöhe bzw. die Halbwertszeit angegeben. Engesetzt als anionische Tenside wurden
- Texapon LS 35 (30 Gew.-%), Laurylalkylsulfat-Natriumsalz (Firma Henkel).
- OMC 853B (30 Gew.-%ige Lösung), C₈₋₁₀ Alkylpolyglycosid, p = 1,5 (Firma Henkel),
- Geladon 35 (5 Gew.-%ige Lösung), C₁₆₋₁₈ Alkylsulfosuccinamid Di-Natriumsalz (Fa. Gela)

Man erkennt, daß die erfindungsgemäße Verwendung von anionischen Tensiden zu stabilen Schäumen führt, wobei insbesondere die Kombination mit Glycerin die Schaumstabilität weiter erhöht.

**Tabelle 1:**

| **Versuch Nr.** | **Tensid(gemisch) Angaben in Gew.-% Rest auf 100 Wasser** | | **Schaumhöhe in mm** | **Halbwertzeit in sec.** | **Standarddichte** |
|---|---|---|---|---|---|
| 1 | ohne Tensidzusatz | | | | kein Schaum |
| 2 | (14) | Texapon LS35 | 910 | 225 | grobporig |
| 3 | (30) | OMC 853 B APG | 910 | 230 | grobporig |
| 4 | (30) | Texapon LS 35 | 930 | 235 | grobporig |
| | (10) | Zucker | | | |
| 5 | (25) | Texapon LS 35 | 980 | 290 | fester, feinporiger |
| | (5) | Geladon 35 | | | Schaum |
| 6 | (25) | OMC 853 B | 890 | 265 | feinporig |
| | (5) | Texapon LS 35 | | | |
| | (10) | Glycerin | | | |
| 7 | (30) | OMC 853 B | 900 | 265 | feinporig |
| | (10) | Polyacrylat A1 | | | |
| 8 | (15) | OMC 853 B | 900 | 450 | feinporig |
| | (35) | Texapon LS | | | |
| | (0,05) | Xantan gum | | | |

## Patentansprüche

1. Verfahren zur Entfernung von unerwünschtem Pflanzen mittels Heißschaum, indem heißes Wasser unter Druck mit heißer Luft vermischt wird und so ein Schaum gebildet wird, der auf die Pflanzen aufgebracht wird, wobei das Wasser anionische Tenside, ggf. in Kombination mit weiteren Hilfs- und Zusatzstoffen, enthält, **dadurch gekennzeichnet, dass** die anionischen Tenside ausgewählt sind aus den Gruppen
der Alkylsulfate mit 8 bis 22 C-Atomen und/oder
der Sulfobernsteinsäuremono- und diester und deren Derivate mit 8 bis 22 C-Atomen pro Alkylkette.

2. Verfahren nach Anspruch 1, **dadurch gekennzeichnet, daß** der Heißschaum eine Temperatur im Bereich von 70 bis 120 °C, vorzugsweise 75 bis 110 °C und insbesondere 80 bis 100 °C aufweist.

3. Verfahren nach den Ansprüchen 1 bis 2, **dadurch gekennzeichnet, daß** im Wasser als anionisches Tensid ein Natriumsalz des Laurylsulfats enthalten ist.

4. Verfahren nach den Ansprüchen 1 bis 3, **dadurch gekennzeichnet, daß** im Wasser als anionische Tenside Di-Natriumsalze von C₁₆₋₁₈ Alkylsulfosuccinamaten enthalten sind.

5. Verfahren nach den Ansprüchen 1 bis 4, **dadurch gekennzeichnet, daß** die anionischen Tenside im Wasser in Mengen (bezogen auf Aktivsubstanz) von 0,1 bis 25 Gew.-%, vorzugsweise von 0,1 bis 15 Gew.-% und insbesondere von 0,25 bis 8 Gew.-%, enthalten sind.

6. Verfahren nach den Ansprüchen 1 bis 5, **dadurch gekennzeichnet, daß** im Wasser Zusatzstoffe aus der Gruppe der organischen Polyhydroxyverbindungen und deren Derivate enthalten sind.

7. Verfahren nach den Ansprüchen 1 bis 6, **dadurch gekennzeichnet, daß** im Wasser als Zusatzstoffe Alkyl(oligo)glycoside enthalten sind.

8. Verfahren nach den Ansprüchen 1 bis 7, **dadurch gekennzeichnet, daß** im Wasser als Zusatzstoff Glycerin enthalten ist.

9. Verfahren nach den Ansprüchen 1 bis 8, **dadurch gekennzeichnet, daß** die Zusatzstoffe im Wasser in Mengen (bezogen auf Aktivsubstanz) von 1 bis 25 Gew.-%, vorzugsweise 0,1 bis 20 Gew.-% und insbesondere von 0,1 bis 15 Gew.-% enthalten sind.

10. Verfahren nach den Ansprüchen 1 bis 9, **dadurch gekennzeichnet, daß** das Wasser Alkylsulfate mit 8 bis 22 C-Atomen in Kombination mit Sulfobernsteinsäuremono- und diester und deren Derivate mit 8 bis 22 C-Atomen pro Alkylrest, enthält.

11. Verfahren nach Anspruch 10, **dadurch gekennzeichnet, daß** das Mengenverhältnis (bezogen auf Aktivsubstanz) von Alkylsulfat zu Sulfobernsteinsäureester im Bereich von 1 : 1 bis 100 : 1 und vorzugsweise im Bereich von 50 : 1 bis 30 : 1 liegt.

12. Verfahren nach den Ansprüchen 1 bis 11, **dadurch gekennzeichnet, daß** dem Wasser vor der Luftzugabe Polymere, ausgewählt aus der Gruppe der Polyacrylate oder anionisch modifizierter polymerer Heterosaccharide.

13. Verfahren nach den Ansprüchen 1 bis 12, **dadurch gekennzeichnet, daß** dem Wasser Xanthan gum zugegeben wird.

14. Verfahren nach den Ansprüchen 1 bis 13, **dadurch gekennzeichnet, daß** dem Wasser vor der Luftzugabe das Polymer in Mengen von 0,01 bis 1 Gew.-% (bezogen auf Aktivsubstanz) zugegeben wird.

15. Verwendung von anionischen Tensiden, ausgewählt aus den Gruppen der Alkylsulfate mit 8 bis 22 C-Atomen und/oder der Sulfobernsteinsäuremono- und diester und deren Derivate mit 8 bis 22 C-Atomen pro Alkylkette in Heißschäumen zur Entfernung von unerwünschten Pflanzen.

## Claims

1. A process for removing unwanted plants with hot foam by mixing hot water under pressure with hot air to form a foam which is applied to the plants, the water containing anionic surfactants, optionally in combination with other auxiliaries and additives, **characterized in that** the anionic surfactants are selected from the groups of alkyl sulfates containing 8 to 22 carbon atoms and/or sulfosuccinic acid monoesters and diesters and derivatives thereof containing 8 to 22 carbon atoms per alkyl chain.

2. A process as claimed in claim 1, **characterized in that** the hot foam has a temperature of 70 to 120°C, preferably in the range from 75 to 100°C and more particularly in the range from 80 to 100°C.

3. A process as claimed in claim 1 and 2, **characterized in that** a sodium salt of lauryl sulfate is present in the water as the anionic surfactant.

4. A process as claimed in claim 1 to 3, **characterized in that** disodium salts of C₁₆₋₁₈ alkyl sulfosuccinamates are present in the water as the nonionic surfactants.

5. A process as claimed in claims 1 to 4, **characterized in that** the anionic surfactants are present in the water in quantities (based on active substance) of 0.1 to 25% by weight, preferably 0.1 to 15% by weight and more particularly 0.25 to 8% by weight.

6. A process as claimed in claims 1 to 5, **characterized in that** additives from the group of organic polyhydroxy compounds and derivatives thereof are present in the water.

7. A process as claimed in claims 1 to 6, **characterized in that** alkyl (oligo)glycosides are present as additives in the water.

8. A process as claimed in claims 1 to 7, **characterized in that** glycerol is present as additive in the water.

9. A process as claimed in claims 1 to 8, **characterized in that** the additives are present in the water in quantities (based on active substance) of 1 to 25% by weight, preferably 0.1 to 20% by weight and more particularly 0.1 to 15% by weight.

10. A process as claimed in claims 1 to 9, **characterized in that** the water contains C₈₋₂₂ alkyl sulfates in combination with sulfosuccinic acid monoesters and diesters and derivatives thereof containing 8 to 22 carbon atoms per alkyl group.

11. A process as claimed in claim 10, **characterized in that** the quantity ratio (based on active substance) of alkyl sulfate to sulfosuccinic acid ester is in the range from 1:1 to 100:1 and preferably in the range from 50:1 to 30:1.

12. A process as claimed in claims 1 to 11, **characterized in that** polymers selected from the group of polyacrylates or anionically modified polymer heterosaccharides are added to the water before the air.

13. A process as claimed in claims 1 to 12, **characterized in that** xanthan gum is added to the water.

14. A process as claimed in claims 1 to 13, **characterized in that** the polymer is added to the water before the air in quantities of 0.01 to 1% by weight (based on active substance).

15. The use of anionic surfactants selected from the groups of alkyl sulfates containing 8 to 22 carbon atoms and/or sulfosuccinic acid monoesters and diesters and derivatives thereof containing 8 to 22 carbon atoms per alkyl chain in hot foams for removing unwanted plants.

## Revendications

1. Procédé d'élimination de plantes non désirées à l'aide de mousse chaude, dans lequel de l'eau chaude est mélangée sous pression avec de l'air chaud et qu'ainsi une mousse se forme qu'on applique sur les plantes, dans lequel l'eau contient des agents tensioactifs anioniques, le cas échéant en combinaison avec d'autres adjuvants et additifs,
**caractérisé en ce que**
les agents tensioactifs anioniques sont choisis dans le groupe des sulfates d'alkyle ayant de 8 à 22 atomes de carbone et/ou des mono et des diesters d'acide sulfo succinique et de leurs dérivés ayant de 8 à 22 atomes de carbone par chaîne alkyle.

2. Procédé selon la revendication 1
**caractérisé en ce que**
la mousse chaude possède une température dans la plage de 70 à 120°C, de préférence de 75 à 110°C et en particulier de 80 à 100°C.

3. Procédé selon les revendications 1 à 2,
**caractérisé en ce que**
un sel de sodium de lauryl sulfate est présent dans l'eau en tant qu'agent tensioactif anionique.

4. Procédé selon les revendications 1 à 3,
**caractérisé en ce que**
comme agents tensioactifs anioniques des sels de sodium d'(alkyl en C₁₆-C₁₈) sulfo succinates sont présents dans l'eau.

5. Procédé selon les revendications 1 à 4,
**caractérisé en ce que**
les agents tensioactifs anioniques sont présents dans l'eau en quantités (rapporté à la substance active), allant de 0,1 à 25 % en poids, de préférence de 0,1 à 15 % en poids et en particulier de 0,25 à 8 % en poids.

6. Procédé selon les revendications 1 à 5,
**caractérisé en ce que**
des additifs sont présents dans l'eau, choisis dans le groupe des composés polyhydroxylés organiques et de leurs dérivés.

7. Procédé selon les revendications 1 à 6,
**caractérisé en ce que**
des alkyl(oligo)glycosides sont présents dans l'eau en tant qu'additifs.

8. Procédé selon les revendications 1 à 7,
**caractérisé en ce que**
du glycérol est présent dans l'eau en tant qu'additif.

9. procédé selon les revendications 1 à 8,
**caractérisé en ce que**
les additifs sont présents dans l'eau en quantité (rapporté à la substance active) allant de 0,11 à 25 % en poids, de préférence de 0,1 à 20 % en poids et en particulier de 0,1 à 15 % en poids.

10. Procédé selon les revendications 1 à 9,
**caractérisé en ce que**
l'eau contient des sulfates d'alkyle ayant de 8 à 22 atomes de carbone, en combinaison avec des mono et des diesters d'acide sulfosuccinique et leurs dérivés ayant de 8 à 22 atomes de carbone par reste alkyle.

11. Procédé selon la revendication 10,
**caractérisé en ce que**
le rapport en quantités (rapporté à la substance active) du sulfate d'alkyle à l'ester d'acide sulfosuccinique, se situe dans la zone de 1 : 1 à 100 : 1, et de préférence dans la zone allant de 50 : 1 à 30 : 1.

12. Procédé selon les revendications 1 à 11,
**caractérisé en ce qu'**
on ajoute à l'eau avant l'addition d'air des polymères choisis dans le groupe des polyacrylates ou des hétéro polysaccharides polymères modifiés anioniquement.

13. Procédé selon les revendications 1 à 12,
**caractérisé en ce qu'**
on ajoute à l'eau de la gomme xanthane.

14. Procédé selon les revendications 1 à 13,
**caractérisé en ce qu'**
on ajoute à l'eau avant l'addition d'air, le polymère en quantités allant de 0,01 à 1 % en poids (rapporté à la substance active).

15. Utilisation d'agents tensioactifs anioniques choisis dans le groupe des sulfates d'alkyle ayant de 8 à 22 atomes de carbone et/ou des mono et des di-esters d'acide sulfosucciniques et de leurs dérivés ayant de 8 à 22 atomes de carbone par chaîne alkyle, dans des mousses chaudes en vue de l'élimination de plantes non désirées.
